# EUROPÄISCHE PATENTSCHRIFT

(11) **EP 0 380 929 B1**
(45) Veröffentlichungstag und Bekanntmachung des Hinweises auf die Patenterteilung: **11.08.1993**
(21) Anmeldenummer: 90100359.0
(22) Anmeldetag: 09.01.1990
(51) Int. Cl.: H01B 7/28

(54) **Elektro-Energie-Kabel**
Electric power cable
Câble électrique de puissance

(30) Priorität: 31.01.1989 DE 3902842
(43) Veröffentlichungstag der Anmeldung: 08.08.1990
(73) Patentinhaber: Kaiser Kabel GmbH, D-12313 Berlin (DE)
(72) Erfinder: Freygang, Hans-Joachim, Dipl.-Ing., D-1000 Berlin 41 (DE)
(74) Vertreter: Müller, Hans-Jürgen, Dipl.-Ing.

(56) Entgegenhaltungen:
- CH-A- 638 923
- DE-A- 2 807 767
- DE-A- 2 810 986
- US-A- 3 579 863
- US-A- 4 241 121

## Beschreibung

Die Erfindung bezieht sich auf ein Elektro-Energie-Kabel der im Oberbegriff des Anspruches 1 genannten Gattung.

Derartige Kabel dienen zum Transport elektrischer Energie hoher elektrischer Leistung. Dabei ist ein solches Kabel bekannt (DE-OS 28 10 986), bei dem eine elektrische Isolierschicht aus Silikonkautschuk und die Schutzschicht aus einer ca. 50 µm dicken Aluminiumfolie besteht, die beidseitig mit Silikon beschichtet ist. Bei einem anderen bekannten Kabel (DE-OS 20 34 036) ist die Aluminiumfolie einseitig mit Polyethylen überzogen. Bei solchen Elektrokabeln ist es wichtig, daß die Isolierschicht, welche den elektrisch leitfähigen Leiter isoliert, gegen den Zutritt von Feuchtigkeit geschützt ist. Dringt Feuchtigkeit, beispielsweise auch nur in Form von Dampf, in das Kabel ein, so wird die Isolierung beeinträchtigt. Aus der Patentschrift US-A- 3 579 863 ist ein Elektro-Energie-Kabel gemäß dem Oberbegriff des Anspruchs 1 bekannt.

Es ist auch bereits bekannt (Bednarz, Kunststoffe in der Elektrotechnik und Elektronik, 1988, Seite 431), Hohlräume innerhalb des Kabels mit einer Kabelfüllmasse auszufüllen, welche die Aufgabe hat, im Falle von Beschädigungen des Kabelmantels den Zutritt von feuchten Dämpfen, Wasser oder dergleichen zur elektrischen Isolierung zu verhindern. Die Verwendung von Wachsen oder Ölgemischen aus Kohlenwasserstoffen, wie Kabelvaseline, ist jedoch oft unerwünscht und in einigen Fällen auch ungenügend.

Bei Kabeln der eingangs genannten Gattung wird die Aluminiumfolie durch Formwerkzeuge rohrförmig mit Überlappung um die Kabelseele gelegt und darüber wird Polyethylen (PE) extrudiert. Die Aluminiumüberlappungsnaht für sich und das Aluminiumblech mit PE werden fest und dauerhaft miteinander verbunden, so daß das Aluminiumblech als Permeationssperre anzusehen ist. Hierdurch kann die Wasserdampf-Permeation durch die Schutzschicht auf etwa 1 bis 2,5 Promille vermindert werden. Es hat sich jedoch gezeigt, daß solche Aluminiumbleche nur mit großem Aufwand so verarbeitet werden können, daß sie an den Nahtstellen genügend abdichten. Dies ist sowohl bei Wendelwicklungen der Aluminumblechbänder als auch bei längs einlaufenden Bändern aus anderem Material der Fall.

Der Erfindung liegt die Aufgabe zugrunde, das Elektro-Energie-Kabel der eingangs genannten Gattung dahingehend zu verbessern, daß trotz einfacher Herstellbarkeit ohne großen Aufwand eine gute Permeationssperre sichergestellt wird.

Die Erfindung ist im Anspruch 1 gekennzeichnet. Die Schutzschicht besteht aus einer Verbundfolie, die ihrerseits mindestens vier Einzellagen aufweist. Bevorzugt wird eine Lage aus einer Aluminiumfolie einer Schichtdicke bis zu etwa 25 µm und einer weiteren Lage aus einer mit dieser verbundenen Kunststoffschicht aus insbesondere PETP gebildet. Die Kunststoffschicht ist zweckmäßigerweise auf die Aluminiumfolie aufkaschiert. Die Schichtdicke der Aluminiumfolie besteht vorzugsweise zwischen 4 und 20 µm.

Verbundfolien dieser Art sind an sich bereits bekannt und für Verpackungszwecke, beispielsweise zur Herstellung von Milchverpackungen aber auch zum Verpacken von elektronischen Bauelementen, verwendet worden. Neu ist die Verwendung dieser Aluminiumverbundfolie zum Einbau in Elektro-Energie-Kabel.

Es hat sich überraschenderweise gezeigt, daß trotz der wesentlichen Materialverminderung gegenüber dem etwa 0,2 mm Aluminiumblech und der dadurch bedingten Verbilligung der Herstellung dennoch eine bessere Verarbeitbarkeit und eine hohe Dichtigkeit der Schutzschicht möglich ist, wenn das Kabel erfindungsgemäß aufgebaut ist. Die Aluminiumfolie einer bevorzugten Schichtdicke von etwa 10 µm läßt sich zwar als solche weniger gut für die Herstellung der Schutzschicht verarbeiten, im Verbund mit der hochfesten Kunststoffolie ist die Verarbeitung überraschenderweise aber sogar wesentlich günstiger als ein 0,2 mm dickes Aluminiumblech.

Im Gegensatz zum Stand der Technik wird die Klebeschicht, die als schmelzklebender Haftkleber (Schmelzkleber) ausgebildet ist, als beidseitige Außenschicht der Verbundfolie durch Beschichten angebracht. Hierdurch wird während der Verarbeitung der Verbundfolie eine ausreichende Zugfestigkeit erreicht.

Es empfiehlt sich, daß die Aluminiumfolie eine Schichtdicke von mehr als 1 µm aufweist, da zu dünne Schichtdicken in der Größenordnung von Atomlagen keinen genügenden Schutz im Sinne einer Permeationssperre sicherstellen.

Die vier Lagen der Verbundfolie erfüllen jeweils unterschiedliche Funktionen.

Anhand der Zeichnung wird ein Ausführungsbeispiel der Erfindung im folgenden näher erläutert. Dabei zeigen:
- Fig. 1: einen Querschnitt durch eine bei der Erfindung verwendete Verbundfolie in wesentlich vergrößerter Darstellung und
- Fig. 2: eine schematische Seitenansicht auf ein Elektrokabel und zwar dessen einzelne Schichtenfolgen, von denen jeweils Einzelschichten weggebrochen sind.

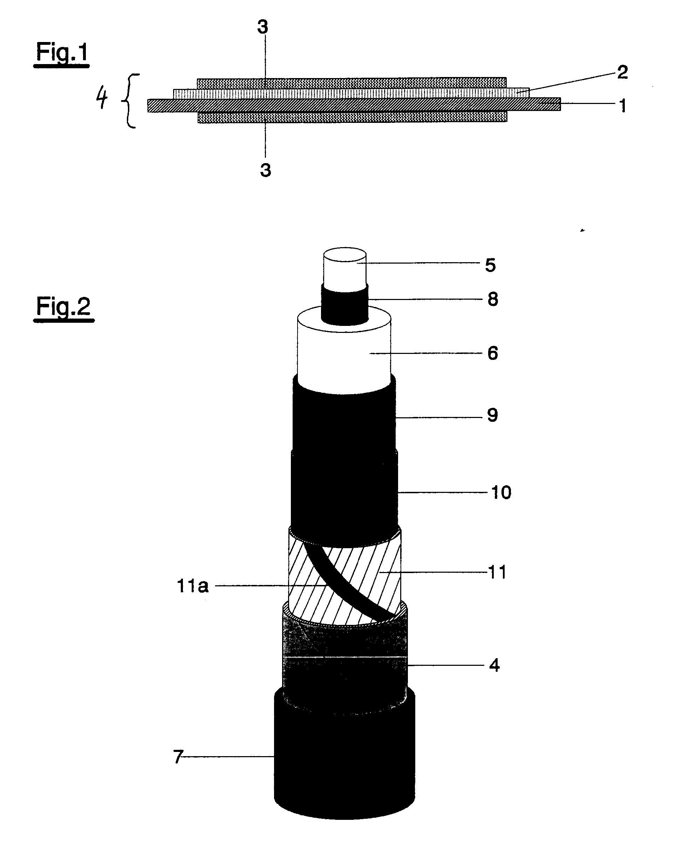

Gemäß Fig. 1 besteht die Verbundfolie 4 aus einer Aluminiumfolie 1 einer Schichtdicke von 12 µm. Einseitig auf der Aluminiumfolie 1 ist eine Kunststoffschicht 2 aus Polyester einer Schichtdicke von 12µm aufgebracht. Die freien Seiten beider Schichten 1 und 2 sind mit einer Klebeschicht 3 einer Schichtdicke von 50µm als Schmelzkleber überzogen, welche beim Erwärmen klebende bzw. an anderen Gegenständen bzw. an sich selbst haftende Eigenschaften aufweist.

Gemäß Fig. 2 ist koaxial um den mittigen elektrisch leitfähigen Leiter 5 eine innere Leitschicht 8 angeordnet, die wiederum koaxial von der Isolierschicht 6 umgeben ist, welche aus elektrisch isolierendem Kunststoff besteht. Hierüber ist eine äußere Leitschicht 9 angeordnet, die ihrerseits von einem Leitquellband 10 und dieses von einem Kupferschirm 11 umwickelt ist, der eine sogenannte "Querleitwendel" 11a aufweist.

Gemäß der Erfindung ist auf diesem Schirm 11 die Verbundfolie 4 wendelförmig aufgewickelt, so daß sich die Ränder der bandförmigen Verbundfolie 4 genügend überlappen. Die geringe Schichtdicke des Aluminiums git der Verbundfolie 4 eine hohe Flexibilität und dadurch eine bessere Dichtigkeit an den Nähten, die an den überlappenden Rändern gebildet werden.

Rings um die rohrförmig gewickelte Verbundfolie 4 ist der Kabelmantel 7 aus PE (Polyethylen) angebracht.

Es hat sich gezeigt, daß die Erfindung auch bei Kabeln anderer Art anwendbar ist, beispielsweise bei Mehrleiterkabeln mit Rund- oder Sektorleitern. Im übrigen ist die Erfindung auch für den Transport von Lichtwellenenergie, d.h. bei Lichtwellenleitern bzw. -kabeln anwendbar.

Schließlich kann es sich empfehlen, zwischen den Schirm 11, 11a aus insbesondere Kupfer und die Verbundfolie 4 eine Schicht einer Füllmischung einzufügen. Diese kann elektrisch leitfähig sein, muß diese Eigenschaft aber nicht aufweisen. Als Füllmischungen kommen z.B. gummihaltige eventuell mit Rußanteilen oder Butylkautschuk in Betracht.

## Patentansprüche

1. Elektro-Energie-Kabel mit mindestens einem langgestreckten elektrisch leitfähigen Leiter (5), mindestens einer diesen umhüllenden, kunststoffaufweisenden, elektrisch isolierenden Isolierschicht (6) sowie mit einer die Isolierschicht (6) umgebenden und vor Feuchtigkeitszutritt schützenden, aus mindestens vier Lagen (1,2,3) bestehenden Schutzschicht, **dadurch gekennzeichnet,**
daß die Schutzschicht als wendelförmig innerhalb des Kabels angeordnete Verbundfolie (4) ausgebildet ist, deren beide im bezug auf die Folienebene außenliegende Lagen (3) aus einem Schmelzkleber bestehen.

2. Elektro-Energie-Kabel nach Anspruch 1, dadurch gekennzeichnet,
daß eine innere Lage der Verbundfolie (4) aus einer Aluminiumfolie (1) mit einer Schichtdicke zwischen ca. 4 und 20 µm besteht.

3. Elektro-Energie-Kabel nach einem der vorhergehenden Ansprüche, dadurch gekennzeichnet,
daß eine innere Lage der Verbundfolie (4) aus hochfestem Kunststoff, wie Polyester besteht.

4. Elektro-Energie-Kabel nach einem der vorhergehenden Ansprüche, dadurch gekennzeichnet,
daß sich zwischen einem Kupferschirm (11), der die Isolierschicht (6) umgibt, und der Verbundfolie (4) , eine Füllmischungsschicht befindet.

## Claims

1. Cable for electrical energy comprising an elongated electrically conducting conductor (5), at least one electrically isolating layer (6) enveloping said conductor and comprising plastic as well as a protecting layer enveloping said isolating layer (6) which protecting layer protects the isolating layer from huminity and comprising at least four layers (1,2,3),
**characterized in that**
said proctecting layer is formed as a compound foil (4) helically disposed within the cable, the outermost layers (3) (with respect to the plan of the foil) of the compound foil consists of a meltable adhesive.

2. Cable as claimed in claim 1,
**characterized in that**
the innerlayer of the compound foil (4) consists of an aluminum foil (1) comprising a layer thickness of between about 4 and 24 µm.

3. Cable according to one of the preceeding claims,
**characterized in that**
the innerlayer of the compound foil (4) consists of a highly rigid plastic, like polyester.

4. Cable as claimed in one of the preceeding claims,
**characterized in that**
a filler mixture layer is disposed between the compound foil (4) and a copper screen (11) surrounding the isolating layer (6).

## Revendications

1. Câble d'énergie électrique comportant au moins un conducteur de l'électricité longitudinal (5), au moins une couche isolante de l'électricité (6) entourant ce conducteur (5) et revêtue de matière plastique ainsi qu'une couche de protection entourant la couche isolante (6) et la protégeant de l'entrée de l'humidité, constituée d'au moins quatre couches (1, 2, 3), caractérisé en ce que la couche de protection est conformée en feuille composite (4) agencée en hélice à l'intérieur du câble, feuille dont les deux couches (3) externes par rapport au plan de la feuille sont constituées d'une colle fondante.

2. Câble d'énergie électrique selon la revendication 1, caractérisé en ce qu'une couche interne de la feuille composite (4) est constituée d'une feuille d'aluminium (1) ayant une épaisseur de couche comprise entre environ 4 et 20 micron

3. Câble d'énergie électrique selon l'une quelconque des revendications précédentes, caractérisé en ce que la couche interne de la feuille composite (4) est constituée d'une matière plastique très résistante telle que du polyester.

4. Câble d'énergie électrique selon l'une quelconque des revendications précédentes, caractérisé en ce qu'il y a entre un blindage de cuivre (11), qui entoure la couche isolante (6), et la feuille composite (4) une couche d'un mélange de remplissage.
